# EUROPÄISCHE PATENTANMELDUNG

(11) **EP 1 300 657 A2**
(43) Veröffentlichungstag der Anmeldung: **09.04.2003**
(21) Anmeldenummer: 02450226.2
(22) Anmeldetag: 07.10.2002
(51) Int. Cl.: G01D 3/02, G01D 18/00

(54) **Sensor mit einer ausserhalb angeordneten Speichereinheit**

(30) Priorität: 08.10.2001 AT 7692001
(71) Anmelder: AVL List GmbH, 8020 Graz (AT)
(72) Erfinder: Friedl, Alexander, Dr., 8052 Graz (AT); Glaser, Josef, Dr., 8047 Graz (AT); Harms, Klaus-Christoph, Dr., 8051 Graz (AT); Leitmeier, Klaus, D.I., 8010 Graz (AT); Moik, Josef, D.I., 8047 Graz (AT); Teichmann, Rüdiger, Dr., 8075 Hart bei Graz (AT); Wallnöfer, Wolfgang, Dr., 8010 Graz (AT)
(74) Vertreter: Pinter, Rudolf, Dipl.-Ing.

(57) **Zusammenfassung**

Bei einer Meßanordnung mit einem Sensor (1) und einer damit über ein lösbares Anschlußkabel (2) verbundenen Auswerteeinheit (3) ist eine über die Auswerteeinheit (3) abfragbare, dem Sensor (1) zugeordnete Speichereinheit (4) mit sensorrelevanten Daten vorgesehen, um die einem allfälligen Sensortausch folgende Berücksichtigung der sensorrelevanten Daten in der Auswerteeinheit (3) vereinfachen zu können. Um die Anordnung auch in rauher Umgebung einsetzbar zu machen ist vorgesehen, daß die Speichereinheit (4) außerhalb des Sensors (1) angeordnet ist, wobei im bzw. am Sensor (1) selbst eine Identifikationseinheit (5) mit einer mit der Speichereinheit (4) korrelierbaren Sensorkennung vorgesehen ist.

## Beschreibung

Die Erfindung betrifft eine Meßanordnung mit einem Sensor und einer damit über ein lösbares Anschlußkabel verbundenen Auswerteeinheit, sowie mit einer über die Auswerteeinheit abfragbaren, dem Sensor zugeordneten Speichereinheit mit sensorrelevanten Daten.

Derartige Meßanordnungen sind heutzutage in vielfältigsten Zusammenhängen im Einsatz und erlauben mittels speziell auf die jeweilige Aufgabe abgestimmter Sensoren die Aufnahme und Auswertung einer großen Palette von Meßwerten zur Charakterisierung mechanischer, elektrischer, physikalischer und chemischer Größen. Speziell im Zusammenhang beispielsweise mit Forschungs- und Entwicklungsaufgaben sind die dabei verwendeten Sensoren heutzutage bereits so spezialisiert und individuell, daß eine genaue und individuelle Anpassung der angeschlossenen Auswerteeinheit an den jeweils angeschlossenen Sensor unumgänglich ist, um überhaupt relevante Meßergebnisse sicherstellen zu können.

So gibt es beispielsweise im Zusammenhang mit piezoelektrischen oder piezoresistiven Sensoren, wie sie etwa zur Bestimmung bzw. Überwachung des Brennraumdruckes oder der Brennraumtemperatur an Brennkraftmaschinen auf einem Prüfstand verwendet werden, eine ganze Reihe von sensorrelevanten Daten, die für eine korrekte Durchführung von Messungen zwingend zu berücksichtigen sind. Diese sensorrelevanten Daten umfassen beispielsweise den Meßbereich, die Resonanzcharakteristik, die Temperaturdrift, Daten über die Kalibrierung, und ähnliche Daten, die jeden derartigen Sensor individuell kennzeichnen und die sich im Laufe der Sensorlebensdauer auch ändern können. Diese sensorrelevanten Daten sind in dem jeweiligen Sensor zugeordneten Datenblättern erfaßt und können damit bei der Verwendung des Sensors bzw. bei seiner Einbindung in die jeweilige Meßanordnung entsprechend berücksichtigt werden, was beispielsweise bei der angesprochenen Verwendung an Prüfständen für Brennkraftmaschinen bis dato durch händisches Eingeben der entsprechenden Parameter an der Auswerteeinheit durch die Bedienperson erfolgte. Dies ist naturgemäß nicht nur zeitaufwendig sondern auch fehleranfällig, was insbesonders dann nachteilig ist, wenn im Laufe einer Meßaufgabe ein häufiger Wechsel der verwendeten Sensoren beispielsweise zur Berücksichtigung geänderter Meßbereiche erforderlich ist.

In verschiedenen Bereichen sind in den letzten Jahren ähnliche Probleme dadurch zu lösen versucht worden, daß man im Sensor eine Speichereinheit in Form eines Mikrochips oder Mikrocomputers einsetzt, in welcher die sensorrelevanten Daten in einer beim Anschluß bzw. Betrieb des Sensors von außen über die Auswerteeinheit her abfragbaren Art gespeichert sind. Siehe dazu beispielsweise DE 39 02 767 A1 oder US 5,025,653 A. Derartige Anordnungen erlauben zwar je nach Art und Speicherkapazität der Speichereinheit die relativ komfortable Ein- und Auslesung von sensorrelevanten Daten, haben aber den Nachteil, daß die relativ hohe Empfindlichkeit aller bekannten, geeigneten Speichereinheiten den Anwendungsbereich stark beschränkt. So können beispielsweise derartige Anordnungen nur bei relativ geringen Umgebungstemperaturen (üblicherweise bis etwa 85° - mit Spezialanordnungen bis maximal etwa 250°) betrieben werden; auch sind starke Vibrationen bzw. stoßartige Belastungen und dergleichen zu vermeiden. Daraus folgt, daß die Verwendung derartiger an sich komfortabler Anordnungen sehr eingeschränkt und beispielsweise im Bereich der oben bereits angesprochenen Prüfstände für Brennkraftmaschinen nicht möglich ist, da etwa bei Brennraumdruck-Sensoren Temperaturen am Sensor bis zu 400°C mit zusätzlicher starker Vibrationsbelastung auftreten können.

Aufgabe der vorliegenden Erfindung ist es, eine Meßanordnung der eingangs genannten Art so zu verbessern, daß die erwähnten Nachteile hinsichtlich des beschränkten Einsatzes vermieden werden und daß auf einfache Weise sensorrelevante Daten komfortabel bei der Messung berücksichtigt werden können.

Die vorliegende Erfindung geht zur Lösung dieser Aufgabe von folgenden Überlegungen aus: Unter Berücksichtigung der am Einsatzort unter Umständen (und speziell bei den angesprochenen Meßaufgaben im Zusammenhang mit Prüfständen für Brennkraftmaschinen) herrschenden rauhen Umgebungsbedingungen (hohe Temperatur, Vibrationen und dergleichen) wäre es für den Fachmann an erster Stelle naheliegend, die gemäß angesprochenem Stande der Technik bei anderen Meßaufgaben bereits im Sensor vorgesehene Speichereinheit beispielsweise durch thermische Abkoppelung, separate Kühlung, Schwingungsisolierung und ähnliche Maßnahmen von diesen unerwünschten Umgebungseinflüssen abzuschirmen, was aber einen zumeist aus Gründen des zur Verfügung stehenden Platzes sowie der Handhabbarkeit der Sensoren in der Praxis nicht vertretbaren Schritt bedeutet. Es bleibt daher als nächstes die Möglichkeit, die Speichereinheit aus dem Sensor und damit dem Bereich der rauhen Umgebungseinflüsse auszulagern, was aber unmittelbar wieder den Nachteil ergibt, daß dann der über das Anschlußkabel lösbar verbundene Sensor nicht zuverlässig und immer der Sensor sein wird, der in der Speichereinheit mit seinen sensorrelevanten Daten charakterisiert ist. Unter Berücksichtigung dieser Überlegungen ist gemäß der vorliegenden Erfindung nun vorgesehen, daß die Speichereinheit außerhalb des Sensors angeordnet ist, wobei im bzw. am Sensor selbst eine Identifikationseinheit mit einer mit der Speichereinheit korrelierbaren Sensorkennung vorgesehen ist. Damit sind nun die wesentlichen Grundfunktionen der Speichereinheit de facto aufgeteilt - die sehr wenigen, und damit in gegenüber rauhen Umgebungsbedingungen unkritischen einfachen Elementen speicherbaren, Identifikationsdaten (z.B. ein einfacher Binärcode) verbleiben physisch fest mit den Sensor verbunden, während die sonstigen sensorrelevanten Daten (wie etwa Empfindlichkeitskurven, Kalibrierdaten und dergleichen) in der ausgelagerten Speichereinheit vorliegend sind, wobei zur Sicherstellung der Zusammengehörigkeit von Speichereinheit und Sensor nur die Überprüfung der einfachen Sensorkennung auf Zugehörigkeit erforderlich ist.

Im einfachsten Fall könnte die Identifikationseinheit am Sensor auch nur mittels einer Beschriftung, einem Barcodestreifen oder ähnlichen sonstigen, optisch oder auf andere geeignete Weise von der Bedienperson abfragbaren Sensorkennung gebildet sein, was gegenüber den bisherigen Meßanordnungen immerhin schon den Vorteil hat, daß die Bedienperson sich nur mehr um das tatsächliche Zusammengehören von Speichereinheit und Sensor kümmern und die sensorrelevanten Daten nicht mehr mit allen Fehlermöglichkeiten aus Datenblättern in die Auswerteeinheit eingeben muß. Bevorzugt sind im Rahmen der Erfindung allerdings Ausbildungen der Identifikationseinheit in bzw. am Sensor, die über das Anschlußkabel von der Speichereinheit bzw. der Auswerteeinheit her zur Sensoridentifikation abfragbar sind.

Im letztgenannten Zusammenhang ist gemäß einer bevorzugten Ausgestaltung der Erfindung vorgesehen, daß bei Ausbildung des Sensors als piezoelektrischer Meßwertaufnehmer die Identifikationseinheit des Sensors vom piezoelektrischen Element selbst gebildet ist, welches von der Speichereinheit bzw. der Auswerteeinheit her unter Ausnutzung des inversen Piezoeffektes über das Anschlußkabel als Schwingelement betreibbar ist, dessen Resonanzspektrum zur Sensoridentifikation dient. Möglichkeiten und konkrete Ausführungen für derartige Resonanzanregungen und -auswertungen sind dabei beispielsweise aus CH 657 457 A5, AT 387 286 B oder auch AT 393 416 B bekannt. Hier wesentlich und bevorzugt sind naturgemäß Anordnungen, bei denen die üblicherweise für den normalen Meßbetrieb verwendeten Anschlußkabel bzw. Meßleitungen auch gleichzeitig zur Abfrage der Identifikationseinheit des Sensors Verwendung finden können. In bevorzugter Weise kann dabei durch konstruktive Maßnahmen das Schwingverhalten des Sensors individuell gestaltet werden, sodaß die Sensoridentifikation trennschärfer wird. Dies kann durch Gestaltung des Meßelementes bzw. seiner Umgebung selbst oder durch gezielte Ausgestaltung eines oder mehrerer zusätzlicher Schwingelemente geschehen.

Nach einer anderen bevorzugten Ausgestaltung der Erfindung kann die Identifikationseinheit des Sensors zumindest ein akustisches Oberflächenwellen-Element aufweisen, das über das Anschlußkabel von der Speichereinheit bzw. der Auswerteeinheit hier mit einem Hochfrequenzimpuls beaufschlagbar ist und als Antwort die als Sensoridentifikation dienenden Signale liefert. Dabei wird die auf der Oberfläche eines piezoelektrischen Materials angeregte Welle durch Anbringung, Schaltung oder Impedanzbelastung von Wandlern oder Reflektoren so beeinflußt, daß aus der Antwort des Elementes auf den Hochfrequenzimpuls Informationen, beispielsweise ein einfacher Identifikationscode, entnommen werden kann. Eine derartige Anordnung ist an sich beispielsweise in DE 44 05 647 A beschrieben und für die einmalige, wiederholt abfragbare Speicherung einer beschränkten Anzahl von Bits geeignet. Derartige Elemente arbeiten rein passiv, wobei die hohe Frequenz (typischerweise im Bereich von über 400 MHz) eine effiziente induktive Ankopplung ohne Wechselwirkung mit Meß- und Resonanzfrequenzen erlaubt. Als piezoelektrisches Substrat für diese Oberflächenwellen-Elemente kann beispielsweise Quarz, GaPO₄ oder Langasit verwendet werden. In besonders bevorzugter Ausgestaltung der Erfindung kann auch unmittelbar ein piezoelektrisches Meßelement selbst als Substrat für das Oberflächenwellen-Element dienen.

Nach einer anderen bevorzugten Ausgestaltung der Erfindung kann die Identifikationseinheit des Sensors aber auch zumindest ein über das Anschlußkabel von der Speichereinheit bzw. der Auswerteeinheit her elektrisch zu mechanischen Schwingungen mit unterschiedlichen Resonanzfrequenzen anregbares Schwingelement aufweisen, wobei das über eine Variation der Anregefrequenz abfragbare Muster an Resonanzfrequenzen zur Sensoridentifikation dient. Es gibt dabei also eine mechanisch schwingfähige Struktur im Sensor mit einer gewissen Zahl von elektrisch anregbaren Elementen, beispielsweise eine Art Kammstruktur aus Piezo-Kristall/Keramik, wobei jede einzelne schwingfähige Zunge entweder eine oder auch mehrere Resonanzfrequenzen haben kann. Die Eigenfrequenzen dieser Elemente liegen bevorzugt naturgemäß in einem Bereich, der für die Messung nicht benötigt bzw. von der sonstigen Sensorstruktur auch nicht verfälscht oder beeinflußt wird. Die anregbaren Schwingelemente zeigen bei Anregung mit ihrer Eigenfrequenz deutliche Resonanzüberhöhungen, was von der Auswerteeinheit her als Muster zur Sensoridentifikation erkannt werden kann. Auch dieser Realisierung der Identifikationseinheit im Sensor ist in rauher Umgebung ohne weiteres unbeeinflußt verwendbar und ermöglicht damit die notwendige eindeutige Zuordnung von Sensor und ausgelagerter Speichereinheit.

Die Identifikationseinheit kann in anderer Weiterbildung der Erfindung zumindest eine passive elektrische Komponente, vorzugsweise zumindest einen elektrischen Widerstand, von bekanntem Wert aufweisen, deren über das Anschlußkabel von der Speichereinheit bzw. der Auswerteeinheit aus abfragbarer Wert zur Sensoridentifikation dient. Passive elektrische Komponenten, wie etwa die genannten Widerstände oder auch Kondensatoren, Induktivitäten, Wellenleiterstücke oder komplex verschaltete Impedanzen, vertragen ohne weiteres auch höhere Temperaturen oder sonstige widrige Umgebungseinflüsse und ermöglichen zumindest eine einfache Sensoridentifikation, wie dies für viele Zwecke ausreichend ist.

Die Speichereinheit selbst kann in besonders bevorzugter Ausgestaltung der Erfindung im Bereich des Anschlußkabels samt Anschlußsteckern angeordnet sein, was eine einfache Handhabbarkeit der erfindungsgemäßen Meßanordnung bzw. eine einfache Austauschbarkeit der Komponenten ermöglicht. Davon abgesehen ist im Rahmen der Erfindung aber natürlich auch beispielsweise die Anordnung der Speichereinheit als separates Modul in oder verbunden mit der Auswerteeinheit vorstellbar, welches dann nicht mit dem jeweiligen Sensor gewechselt wird und somit die sensorrelevanten Daten aller in Frage kommenden Sensoren enthalten und gegebenenfalls auch durch Neuaufnahme der Daten von neu hinzukommenden Sensoren aktualisiert werden müßte.

In bevorzugter weiterer Ausgestaltung der Erfindung ist vorgesehen, daß die Speichereinheit in das Anschlußkabel zwischen den beidseitigen Anschlußsteckern integriert ist, was eine einfache Handhabbarkeit sicherstellt und zufolge der beschriebenen Korrelation der Sensorkennung mit der jeweiligen Speichereinheit auch das Zusammengehören der beiden Komponenten einfach sicherstellt.

Die Speichereinheit ist in besonders bevorzugter Ausgestaltung der Erfindung im Anschlußstecker auf der Seite der Auswerteeinheit integriert, was konstruktiv einfach möglich ist und die Handhabung vereinfacht.

Im zuletzt genannten Zusammenhang bevorzugt ist weiters, daß der Anschlußstecker auf der Seite der Auswerteeinheit aus einem am Anschlußkabel fixierten Kabelstecker und einem zwischen diesem und der Anschlußbuchse an der Auswerteeinheit beidseitig lösbaren Übergangstecker besteht, wobei die Speichereinheit im Übergangsstecker angeordnet ist. Damit sind die wesentlichen Funktionen des Anschlußsteckers im Rahmen der vorliegenden Erfindung aufgeteilt und somit eine einfachere räumliche bzw. konstruktive Optimierung der Einzelteile möglich.

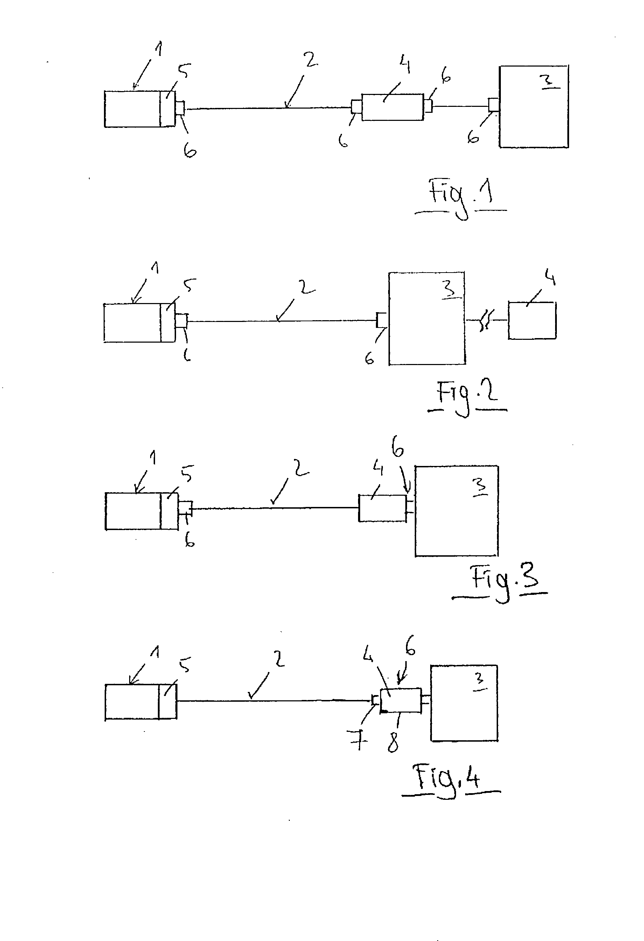

Die Erfindung wird im folgenden noch anhand der in der Zeichnung schematisch dargestellten Ausführungsbeispiele näher erläutert. Fig. 1 bis 4 zeigen dabei verschiedene Möglichkeiten zur Realisierung einer erfindungsgemäßen Meßanordnung.

Gemäß allen Ausführungsbeispielen ist ein Sensor 1 über ein lösbares Anschlußkabel 2 mit einer Auswerteeinheit 3 verbunden. Der Sensor 1 ist auf nicht weiter dargestellte Weise am Meßort befestigt und liefert über das Anschlußkabel 2 kontinuierlich oder diskontinuierlich, abgefragt oder selbständig, elektrische Signale an die Auswerteeinheit 3, wo diese entsprechend aufbereitet und zu für die jeweilige Meßgröße repräsentativen Meßwerten umgewandelt werden. Beispielsweise kann der Sensor 1 als piezoelektrischer Druck- oder Kraftaufnehmer ausgebildet und an einer nicht weiter dargestellten Brennkraftmaschine zur Messung bzw. Überwachung des Brennraumdruckes eingesetzt werden.

Um den Sensor 1 gegenüber der Auswerteeinheit 3 mit sensorrelevanten Daten (beispielsweise bezüglich der Sensorempfindlichkeit oder dergleichen) zu identifizieren und damit die händische Eingabe entsprechender Werte aus Datenblättern durch die Bedienungsperson überflüssig zu machen, ist eine dem Sensor 1 zugeordnete Speichereinheit 4 mit sensorrelevanten Daten vorgesehen, die beispielsweise in Form eines Mikrochips oder Mikrocomputers die entsprechenden Daten ein- und auslesbar enthält. Die Speichereinheit ist in allen Ausführungsbeispielen außerhalb des Sensors 1 angeordnet, womit sie von nachteiligen Auswirkungen rauher Umgebungsbedingungen in der Sensorumgebung (beispielsweise hohen Temperaturen oder starken Vibrationen) abgekoppelt ist. Um dennoch die erforderliche Korrelation zum jeweiligen Sensor garantieren zu können, ist im bzw. am Sensor 1 eine Identifikationseinheit 5 mit einer mit der Speichereinheit 4 korrelierbaren Sensorkennung vorgesehen.

Gemäß Fig. 1 ist die Speichereinheit 4 in das Anschlußkabel 2 zwischen den Anschlußsteckern 6 auf der Seite des Sensors 1 einerseits und auf der Seite der Auswerteeinheit 3 andererseits integriert - es ist aber belanglos, ob an der Speichereinheit 4 selbst - wie dargestellt, noch weitere Anschlußstecker 6 vorgesehen sind, oder ob das Anschlußkabel 2 an der Speichereinheit 4 fix befestigt ist. Auch könnte weiters der Anschlußstecker 6 auf der Seite des Sensors 1 durch eine fixe Kabelverbindung ersetzt sein, womit insgesamt nur mehr auf der Seite der Auswerteeinheit 3 eine lösbare Steckverbindung für Speichereinheit 4 samt Anschlußkabel 2 am Sensor 1 verbliebe.

Gemäß Fig. 2 ist der Sensor 1 mittels des Anschlußkabels 2 unmittelbar (hier wiederum mittels beidseitiger Anschlußstecker 6) an der Auswerteeinheit 3 angesteckt. Die Speichereinheit 4 ist hier in einer mit der Auswerteeinheit 3 in Verbindung stehenden, ausgelagerten Datenbank vorgesehen, was zwar die jeweilige aktuelle lokale Anbindung des Sensors 1 vereinfacht aber andererseits voraussetzt, daß in der Speichereinheit 4 bzw. der entsprechenden Datenbank Daten über alle möglichen in Frage kommenden Sensoren 1 gespeichert sind. Abgesehen von einer unmittelbaren leitungsmäßigen Verbindung zwischen der Auswerteeinheit 3 und der Speichereinheit 4 bzw. der entsprechenden Datenbank könnte hier aber natürlich auch beispielsweise eine nur bedarfsweise aktivierbare Datenverbindung vorgesehen sein, womit die Speichereinheit 4 auch in einer entfernt von der Auswerteeinheit 3 und zentral für mehrere oder alle Auswerteeinheiten 3 stehenden Datenbank realisiert sein könnte. Damit würde die Abfrage der relevanten Sensordaten nur bedarfsweise beispielsweise über eine Netzwerkverbindung erfolgen.

Gemäß Fig. 3 ist die Speichereinheit 4 im Anschlußstecker 6 auf der Seite der Auswerteeinheit 3 integriert, wobei auch hier wiederum beispielsweise auf Seite des Sensors 1 eine fixe Verbindung des Anschlußkabels 2 zum Sensor 1 vorgesehen sein könnte.

Bei der Ausführung nach Fig. 4 besteht der Anschlußstecker 6 auf der Seite der Auswerteeinheit 3 aus einem am Anschlußkabel 2 fixierten Kabelstecker 7 und einem zwischen diesem und der Anschlußbuchse an der Auswerteeinheit 3 beidseitig lösbaren Übergangsstecker 8, wobei die Speichereinheit 4 im Übergangsstecker 8 angeordnet ist.

Allen dargestellten Ausführungsbeispielen ist gemeinsam, daß die Speichereinheit 4 mit der Identifikationseinheit 5 des Sensor 1 über die Meßleitungen des Sensors im Anschlußkabel 2 kommuniziert, womit weitere Verbindungen zwischen den erwähnten Bauteilen überflüssig sind. Die Verbindung der Speichereinheit 4 mit der Auswerteeinheit 3 kann bedarfsweise auch über mehrere Leitungen erfolgen.

Die Identifikationseinheit 5 des Sensors 1 kann auf beschriebene und hier nicht näher dargestellte Weise beispielsweise von einem piezoelektrischen Meßelement im Sensor 1 selbst gebildet sein, welches unter Ausnutzung des inversen Piezoeffektes über das Anschlußkabel 2 als Schwingelement betreibbar ist und dessen Resonanzspektrum zur Sensoridentifikation dient. Auch könnte ein akustischen Oberflächenwellen-Element in der Identifikationseinheit 5 vorgesehen sein, dessen Antwort auf einen anregenden Hochfrequenzimpuls als Sensoridentifikation dient. Weitere Möglichkeiten der konkreten Ausgestaltung der Identifikationseinheit 5 sind eingangs beschrieben.

## Patentansprüche

1. Meßanordnung, mit einem Sensor (1) und einer damit über ein lösbares Anschlußkabel (2) verbundenen Auswerteeinheit (3), sowie mit einer über die Auswerteeinheit (3) abfragbaren, dem Sensor (1) zugeordneten Speichereinheit (4) mit sensorrelevanten Daten, **dadurch gekennzeichnet, daß** die Speichereinheit (4) außerhalb des Sensors (1) angeordnet ist, wobei im bzw. am Sensor (1) selbst eine Identifikationseinheit (5) mit einer mit der Speichereinheit (4) korrelierbaren Sensorkennung vorgesehen ist.

2. Meßanordnung nach Anspruch 1, **dadurch gekennzeichnet, daß** die Speichereinheit (4) im Bereich des Anschlußkabels (2) samt Anschlußsteckern (6) angeordnet ist.

3. Meßanordnung nach Anspruch 2, **dadurch gekennzeichnet, daß** die Speichereinheit (4) in das Anschlußkabel (2) zwischen den beidseitigen Anschlußsteckern (6) integriert ist.

4. Meßanordnung nach Anspruch 2, **dadurch gekennzeichnet, daß** die Speichereinheit (4) im Anschlußstecker (6) auf der Seite der Auswerteeinheit (3) integriert ist.

5. Meßanordnung nach Anspruch 4, **dadurch gekennzeichnet, daß** der Anschlußstecker (6) auf der Seite der Auswerteeinheit (3) aus einem am Anschlußkabel (2) fixierten Kabelstecker (7) und einem zwischen diesem und der Anschlußbuchse an der Auswerteeinheit (3) beidseitig lösbaren Übergangsstecker (8) besteht, wobei die Speichereinheit (4) im Übergangsstecker (8) angeordnet ist.

6. Meßanordnung nach einem oder mehreren der Ansprüche 1 bis 5, **dadurch gekennzeichnet, daß** die Speichereinheit (4) mit der Identifikationseinheit (5) des Sensors (1) und/oder mit der Auswerteeinheit (3) über die Meßleitungen des Sensors (1) im Anschlußkabel (2) kommuniziert.

7. Meßanordnung nach einem oder mehreren der Ansprüche 1 bis 6, **dadurch gekennzeichnet, daß** bei Ausbildung des Sensors (1) als piezoelektrischer Meßwertaufnehmer die Identifikationseinheit (5) des Sensors (1) vom piezoelektrischen Meßelement selbst gebildet ist, welches von der Speichereinheit (4) bzw. der Auswerteeinheit (3) her unter Ausnutzung des inversen Piezoeffektes über das Anschlußkabel (2) als Schwingelement betreibbar ist, dessen Resonanzspektrum zur Sensoridentifikation dient.

8. Meßanordnung nach einem oder mehreren der Ansprüche 1 bis 6, **dadurch gekennzeichnet, daß** die Identifikationseinheit (5) des Sensors (1) zumindest ein akustisches Oberflächenwellen-Element aufweist, das über das Anschlußkabel (2) von der Speichereinheit (4) bzw. der Auswerteeinheit (3) her mit einem Hochfrequenzimpuls beaufschlagbar ist und als Antwort die als Sensoridentifikation dienenden Signale liefert.

9. Meßanordnung nach Anspruch 8, **dadurch gekennzeichnet, daß** bei Ausbildung des Sensors (1) als piezoelektrischer Meßwertaufnehmer das bzw. eines der Meßelement(e) unmittelbar als Substrat für das Oberflächenwellen-Element dient.

10. Meßanordnung nach einem oder mehreren der Ansprüche 1 bis 6, **dadurch gekennzeichnet, daß** die Identifikationseinheit (5) des Sensors (1) zumindest ein über das Anschlußkabel (2) von der Speichereinheit (4) bzw. der Auswerteeinheit (3) her elektrisch zu mechanischen Schwingungen mit unterschiedlichen Resonanzfrequenzen anregbares Schwingelement aufweist, wobei das über eine Variation der Anregefrequenz abfragbare Muster an Resonanzfrequenzen zur Sensoridentifikation dient.

11. Meßanordnung nach einem oder mehreren der Ansprüche 1 bis 6, **dadurch gekennzeichnet, daß** die Identifikationseinheit (5) des Sensors (1) zumindest eine passive elektrische Komponente, vorzugsweise zumindest einen elektrischen Widerstand, von bekanntem Wert aufweist, deren über das Anschlußkabel (2) von der Speichereinheit (4) bzw. der Auswerteeinheit (3) aus abfragbarer Wert zur Sensoridentifikation dient.
